# EUROPÄISCHE PATENTSCHRIFT

(11) **EP 1 958 751 B1**
(45) Veröffentlichungstag und Bekanntmachung des Hinweises auf die Patenterteilung: **18.11.2015**
(21) Anmeldenummer: 08002007.6
(22) Anmeldetag: 04.02.2008
(51) Int. Cl.: B29C 45/17

(54) **Schliesseinheit für eine Spritzgiessmaschine**
Clamping unit for an injection moulding machine
Unité de fermeture pour une machine de moulage par injection

(30) Priorität: 13.02.2007 AT 2232007
(43) Veröffentlichungstag der Anmeldung: 20.08.2008
(73) Patentinhaber: ENGEL AUSTRIA GmbH, 4311 Schwertberg (AT)
(72) Erfinder: Wobbe, Hans, 82211 Herrsching (DE); Kappelmüller, Werner, 4311 Schwertberg (AT)
(74) Vertreter: Gangl, Markus

(56) Entgegenhaltungen:
- EP-A- 0 554 068
- EP-A- 0 585 630
- WO-A-95/04643
- DE-A1-102006 014 038
- DE-C1- 4 426 521

## Beschreibung

Die vorliegende Erfindung betrifft eine Schließeinheit für eine holmlose Spritzgießmaschine, mit einem zwischen einer Stirnplatte und einer bewegbaren Formaufspannplatte angeordneten Direktantrieb, wobei der Direktantrieb eine über wenigstens ein erstes Gelenk an der Stirnplatte gelagerte, angetriebene Gewindespindel aufweist.

Eine derartige Schließeinheit geht beispielsweise aus der DE 102 19 859 B4 hervor.

Bei der in der DE 102 19 859 B4 gezeigten Schließeinheit ist der Direktantrieb über ein als elastisches Element ausgebildetes Gelenk an der Stirnplatte der Schließeinheit gelagert und fest mit der bewegbaren Formaufspannplatte verbunden.

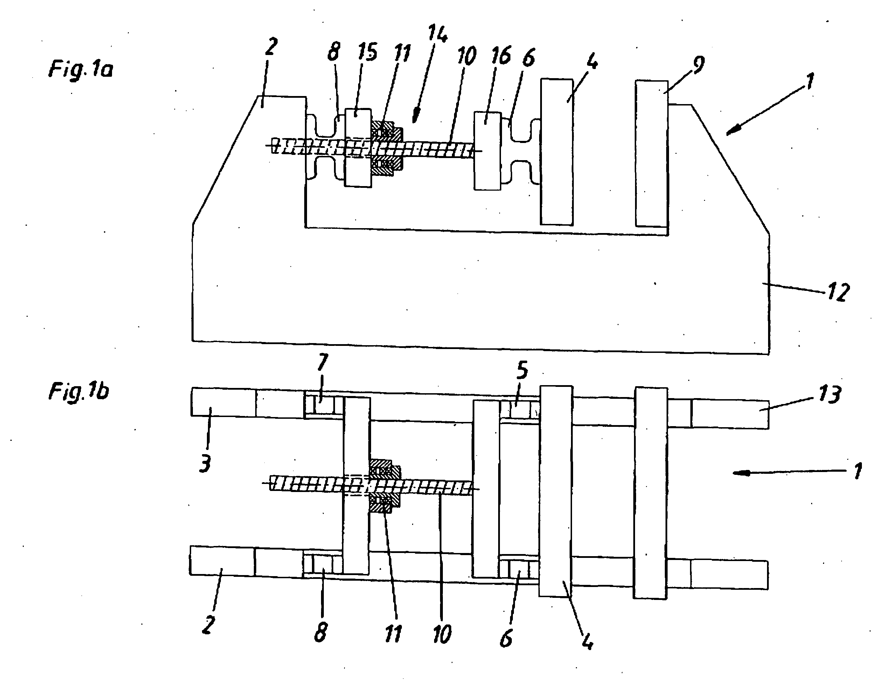

Die WO 95/04643 A1 lehrt in den Figuren 1 bis 8 die Lagerung des Direktantriebs über ein Gelenk an der bewegbaren Formaufspannplatte. In diesen Ausführungsbeispielen ist der Direktantrieb fest mit der Stirnplatte verbunden. In den Ausführungsbeispielen nach den Figuren 8 bis 23 ist der Direktantrieb über ein Gelenk mit der Stirnplatte verbunden. In diesen Ausführungsbeispielen ist der Direktantrieb fest mit der bewegbaren Formaufspannplatte verbunden.

Die Gelenke sorgen jeweils dafür, die Formhälften während des Anliegens der Schließkraft parallel zu halten. Hierfür ist das jeweils vorgesehene Gelenk höhenverstellbar auszubilden, da die durch die Schließkräfte hervorgerufene Verformung des Rahmens der Schließeinheit nicht nur eine Kippbewegung, sondern auch eine Verschiebung der bewegbaren Formaufspannplatte bewirkt. Derartige höhenverstellbare Gelenke sind konstruktiv relativ aufwendig.

Aufgabe der Erfindung ist es, eine konstruktiv einfachere Lösung zu finden, welche ebenfalls die Parallelität der Formhälften gewährt.

Diese Aufgabe wird durch eine Schließeinheit mit den Merkmalen des Anspruchs 1 gelöst.

Durch das Vorsehen einer gelenkigen Lagerung des Direktantriebs sowohl an der bewegbaren Formaufspannplatte als auch an der Stirnplatte ist es nicht notwendig, eines der Gelenke höhenverstellbar auszubilden.

Die Gelenke können stattdessen einfach als Dreh- oder Biegegelenke ausgebildet sein.

Vorteilhaft kann der Direktantrieb eine angetriebene Gewindespindel aufweisen. Der Direktantrieb kann beispielsweise als elektrischer Direktantrieb ausgebildet sein.

Weitere Vorteile und Einzelheiten der Erfindung ergeben sich anhand der Figuren sowie der dazugehörigen Figurenbeschreibung, Dabei zeigen:
- Fig. 1 a, 1 b: ein erstes Ausführungsbeispiel einer erfindungsgemäßen Schließeinheit und
- Fig. 2a, 2b: ein zweites Ausführungsbeispiel einer erfindungsgemäßen Schließeinheit.

Die Fig. 1a und 1b zeigen eine erfindungsgemäße Schließeinheit 1 in Seiten- bzw. Draufsicht. Im vorliegenden Ausführungsbeispiel umfasst der Direktantrieb 14 eine Gewindespindel 10, welche von einem Elektromotor 11 antreibbar ist. Die Gewindespindel 10 ist dabei über eine Lagerplatte 15 an der Stirnplatte 2, 3 und über eine Lagerplatte 16 an der bewegbaren Formaufspannplatte 4 der Schließeinheit 1 gelagert. Erfindungsgemäß erfolgt die Lagerung über zwei zweite Gelenke 5, 6 an der bewegbaren Formaufspannplatte 4 sowie über zwei erste Gelenke 7, 8 an der Stirnplatte 2, 3. In diesem Ausführungsbeispiel sind sowohl die ersten als auch die zweiten Gelenke 5, 6, 7, 8 als Biegegelenke ausgebildet.

Erkennbar ist weiters eine feststehende Formaufspannplatte 9. Der Direktantrieb 14 dient zur Ausführung des Eil- bzw. Krafthubes der bewegbaren Formaufspannplatte 4 in Bezug auf die feststehende Formaufspannplatte 9.

Wie insbesondere aus Fig. 1b hervorgeht, weist die Schließeinheit 1 in diesem Ausführungsbeispiel zwei im Wesentlichen U-förmige Rahmenteile 12, 13 auf, wobei die bewegbare Formaufspannplatte 4 entlang der Stege der U-förmigen Rahmenteile 12, 13 verfahrbar ist. Die Stirnplatte 2, 3 wird in diesem Ausführungsbeispiel durch je einen Schenkel der U-förmigen Rahmenteile 12, 13 gebildet.

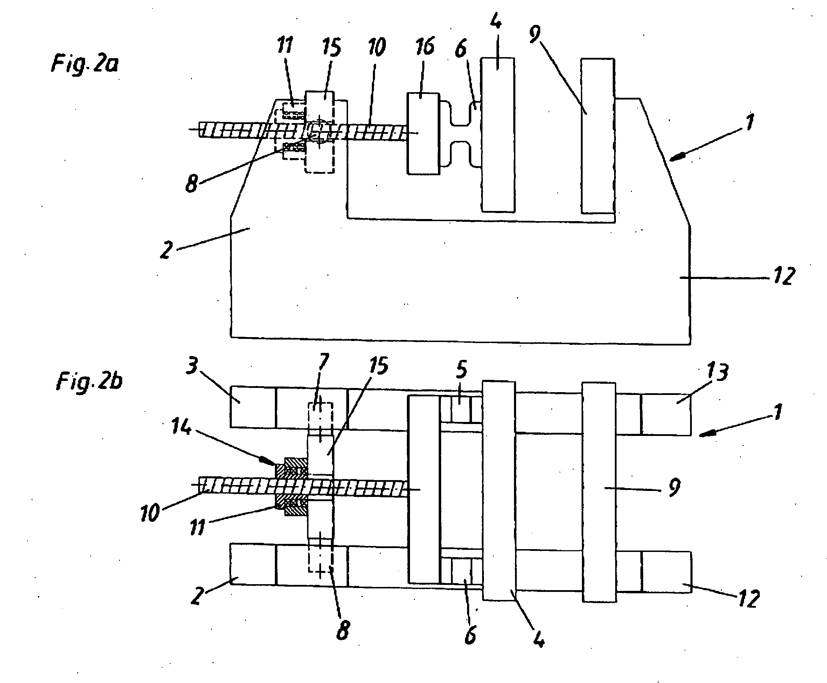

Das Ausführungsbeispiel gemäß den Fig. 2a und 2b unterscheidet sich von jenem der Fig. 1a und 1b dadurch, dass die Lagerung des Direktantriebs 14 an der Stirnplatte 2, 3 über als Drehgelenke ausgebildete erste Gelenke 7,8 erfolgt.

## Patentansprüche

1. Schließeinheit für eine holmlose Spritzgießmaschine, mit einem zwischen einer Stirnplatte und einer bewegbaren Formaufspannplatte angeordneten Direktantrieb, wobei der Direktantrieb eine über wenigstens ein erstes Gelenk an der Stirnplatte gelagerte, angetriebene Gewindespindel aufweist, **dadurch gekennzeichnet, dass** die Gewindespindel (10) über wenigstens ein zweites Gelenk (5, 6) an der bewegbaren Formaufspannplatte (4) gelagert ist.

2. Schließeinheit nach Anspruch 1, **dadurch gekennzeichnet, dass** das wenigstens eine zweite Gelenk (5, 6) als Biegegelenk ausgebildet ist.

3. Schließeinheit nach Anspruch 1 oder 2, **dadurch gekennzeichnet, dass** das wenigstens eine erste Gelenk (7, 8) als Biegegelenk ausgebildet ist.

4. Schließeinheit nach Anspruch 1 oder 2, **dadurch gekennzeichnet, dass** das wenigstens eine erste Gelenk (7, 8) als Drehgelenk ausgebildet ist

5. Schließeinheit nach einem der Ansprüche 1 bis 4, **dadurch gekennzeichnet, dass** die Gewindespindel (10) drehfest mit der bewegbaren Formaufspannplatte (4) verbunden ist.

6. Schließeinheit nach Anspruch 5, **dadurch gekennzeichnet, dass** die Gewindespindel (10) über eine Lagerplatte (16) an der bewegbaren Formaufspannplatte (4) gelagert ist.

7. Schließeinheit nach einem der Ansprüche 1 bis 6, **dadurch gekennzeichnet, dass** die Gewindespindel (10) von einem Elektromotor (11) antreibbar ist.

8. Schließeinheit nach Anspruch 7, **dadurch gekennzeichnet, dass** die Gewindespindel (10) durch den Elektromotor (11) in Bezug auf die feststehende Formaufspannplatte (9) verschiebbar ist

9. Holmlose Spritzgießmaschine, **gekennzeichnet durch** eine Schließeinheit (1) nach einem der Ansprüche 1 bis 8.

## Claims

1. A closing unit for a tie-bar-less injection moulding machine comprising a direct drive arranged between an end plate and a moveable mould mounting plate, wherein the direct drive has a driven threaded spindle mounted by way of at least one first joint to the end plate, **characterised in that** the threaded spindle (10) is mounted to the moveable mould mounting plate (4) by way of at least one second joint (5, 6).

2. A closing unit according to claim 1 **characterised in that** the at least one second joint (5, 6) is in the form of a flexural joint.

3. A closing unit according to claim 1 or claim 2 **characterised in that** the at least one first joint (7, 8) is in the form of a flexural joint.

4. A closing unit according to claim 1 or claim 2 **characterised in that** the at least one first joint (7, 8) is in the form of a rotary joint.

5. A closing unit according to one of claims 1 to 4 **characterised in that** the threaded spindle (10) is non-rotatably connected to the moveable mould mounting plate (4).

6. A closing unit according to claim 5 **characterised in that** the threaded spindle (10) is mounted to the moveable mould mounting plate (4) by way of a mounting plate (16).

7. A closing unit according to one of claims 1 to 6 **characterised in that** the threaded spindle (10) is driveable by an electric motor (11).

8. A closing unit according to claim 7 **characterised in that** the threaded spindle (10) is displaceable by the electric motor (11) in relation to the stationary mould mounting plate (4).

9. A tie-bar-less injection moulding machine **characterised by** a closing unit (1) according to one of claims 1 to 8.

## Revendications

1. Unité de fermeture pour une machine de moulage par injection sans longeron, avec un entraînement direct disposé entre une plaque frontale et une plaque porte-outillage mobile, dans laquelle l'entraînement direct présente une broche filetée entraînée, logée sur la plaque frontale au moyen d'au moins un premier joint articulé, **caractérisée en ce que** la broche filetée (10) est logée au moyen d'au moins un deuxième joint articulé (5, 6) sur la plaque porte-outillage mobile (4).

2. Unité de fermeture selon la revendication 1, **caractérisée en ce que** le au moins un deuxième joint articulé (5, 6) est conçu comme un joint articulé de flexion.

3. Unité de fermeture selon la revendication 1 ou 2, **caractérisée en ce que** le au moins un premier joint articulé (7, 8) est conçu comme un joint articulé de flexion.

4. Unité de fermeture selon la revendication 1 ou 2, **caractérisée en ce que** le au moins un premier joint articulé (7, 8) est conçu comme une articulation à charnière.

5. Unité de fermeture selon l'une des revendications 1 à 4, **caractérisée en ce que** la broche filetée (10) est reliée en rotation à la plaque porte-outillage mobile (4).

6. Unité de fermeture selon la revendication 5, **caractérisée en ce que** la broche filetée (10) est logée au moyen d'une plaque d'appui (16) sur la plaque porte-outillage mobile (4).

7. Unité de fermeture selon l'une des revendications 1 à 6, **caractérisée en ce que** la broche filetée (10) peut être entraînée par un moteur électrique (11).

8. Unité de fermeture selon la revendication 7, **caractérisée en ce que** la broche filetée (10) est déplaçable par le moteur électrique par rapport à la plaque porte-outillage fixe (9).

9. Machine de moulage par injection sans longeron, **caractérisée par** une unité de fermeture (1) selon l'une des revendications 1 à 8.
